# EUROPÄISCHE PATENTSCHRIFT

(11) **EP 1 145 827 B1**
(45) Veröffentlichungstag und Bekanntmachung des Hinweises auf die Patenterteilung: **17.09.2003**
(21) Anmeldenummer: 01103172.1
(22) Anmeldetag: 10.02.2001
(51) Int. Cl.: B29C 67/00, B22F 3/105

(54) **Vorrichtung und Verfahren zum Sintern eines Pulvers mit einem Laserstrahl**
Apparatus and method for laser sintering a powder
Dispositif et procédé de frittage par laser d'une poudre

(30) Priorität: 19.02.2000 DE 10007711
(43) Veröffentlichungstag der Anmeldung: 17.10.2001
(73) Patentinhaber: DaimlerChrysler AG, 70567 Stuttgart (DE)
(72) Erfinder: Steinberger, Jürgen, 82194 Gröbenzell (DE); Shen, Jialin, Dr., 89134 Blaustein (DE)

(56) Entgegenhaltungen:
- DE-A- 19 722 415
- US-A- 5 155 321
- US-A- 5 156 461
- US-A- 5 393 482
- US-A- 5 427 733
- US-A- 5 430 666
- US-A- 5 508 489
- US-A- 5 790 275

## Beschreibung

Die Erfindung betrifft eine Vorrichtung und ein Verfahren zum Sintem eines Pulvers mit einem Laserstrahl gemäß Oberbegriff der Patentansprüche 1 und 8. Eine Vorrichtung und ein Verfahren zum Sintern eines Pulvers mit einem Laserstrahl sind bereits aus der EP 0731743 B1 bekannt.

In der Produktionstechnik und insbesondere im industriellen Modellbau wird die Entwicklung neuartiger schneller Herstellungsmethoden ständig vorangetrieben. Eine Gruppe derartiger schneller Herstellungsverfahren wird als Rapid-Prototyping-Verfahren bezeichnet. Zu dieser Gruppe gehört das Selektive Laser-Sintern (SLS).

Lasersintern ist ein Verfahren, bei dem ein pulverförmiges Material durch Temperaturerhöhung zumindest angeschmolzen wird, so daß die einzelnen Partikeln des Pulvers miteinander verkleben. Diese Temperaturerhöhung wird beim SLS durch Bestrahlung des Pulvers mit einem Laser erzielt.

Die Herstellung eines Bauteils mittels SLS erfolgt schichtweise. Ein Laserstrahl mit im wesentlichen konstanter Leistung wird in aufeinderfolgenden Linien über ein Pulverbett geführt und bindet die Pulverpartikeln wo er auftrifft. In Bereichen, in denen keine Sinterung erfolgen soll, wird der Laser ausgeschaltet. Sobald eine Schicht komplett abgefahren wurde, wird das Pulverbett abgesenkt und eine neue Schicht Pulver wird über die vorhergehende, nun teilweise gesinterte Schicht aufgetragen. Die eben beschriebene Abfolge von Prozeßschritten wird für die aktuelle und weitere Oberflächenschichten wiederholt bis das gesamte Bauteil fertiggestellt ist.

Das SLS mit im wesentlichen konstanter Laserleistung erzeugt jedoch Bauteile mit ungleichmäßigen Materialeigenschaften. Es kommt vor, daß Bereiche des Pulverbettes vollständig schmelzen. Daraus resultieren Rinnen. Ebenso kommt es vor, daß Bereiche des Pulverbettes nicht genügend anschmelzen und deshalb nicht alle Partikeln miteinander verkleben. Derartige ungleichmäßige Sinterung führt zu Prozeßungenauigkeit und schlechten Materialeigenschaften.

Zur Kompensation dieses Problems wird in der EP 0731743 B1 vorgeschlagen, die Temperatur des Pulvers in einer beweglichen Erfassungsfläche im Bereich der Sinterstelle zu erfassen und die Leistung des Lasers in Abhängigkeit von der erfaßten Temperatur zu Steuern, um den Wärmehaushalt des Bauteils während seiner Herstellung zu homogenisieren. Hierzu wird die von der Sinterstelle radialsymmetrisch emittierte Wärmestrahlung über dieselben Scanner-Spiegel geführt, wie auch der Laserstrahl, danach mittels eines dichromatischen Strahlteilers ausgekoppelt und mit einer Linse auf einen IR-Sensor fokussiert.

Die Kompensation gemäß der EP 0731743 B1 verbessert die Bauteilqualität, aber trotzdem treten noch Inhomogenitäten auf, die für Anwendungen mit hohem Qualitätserfordernis nicht tolerierbar sind und so eine kommerzielle Anwendung einschränken.

In der US 5393482 und in der korrespondierenden US 5508489 werden ein Verfahren und eine Vorrichtung zum Sintern eines Pulvers mit zwei sich überlagernden Laserstrahlen - einem fokussierten und einem defokussierten Laserstrahl - sowie mit mehreren Temperaturerfassungsflächen dargestellt.

Die Aufgabe der vorliegenden Erfindung besteht daher darin, eine Vorrichtung und ein Verfahren zum Sintern eines Pulvers mit einem Laserstrahl mit einer Temperaturerfassungsfläche anzugeben, welche geeignet sind, das Auftreten derartiger Inhomogenitäten weiter zu reduzieren.

Die Erfindung ist in Bezug auf die zu schaffende Vorrichtung durch die Merkmale des Patentanspruchs 1 wiedergegeben. Die weiteren Ansprüche enthalten vorteilhafte Ausgestaltungen und Weiterbildungen der erfindungsgemäßen Vorrichtung (Patentansprüche 2 bis 7).

Die Erfindung ist in Bezug auf das zu schaffende Verfahren durch die Merkmale des Patentanspruchs 8 wiedergegeben. Die weiteren Ansprüche enthalten vorteilhafte Ausgestaltungen und Weiterbildungen des erfindungsgemäßen Verfahrens (Patentansprüche 9 bis 13).

Die Aufgabe wird bezüglich der zu schaffenden Vorrichtung erfindungsgemäß dadurch gelöst, daß die Vorrichtung zum Sintern eines Pulvers mit einem Laserstrahl enthält
- eine Einrichtung zur Erzeugung des Laserstrahls,
   der auf eine Oberfläche des Pulvers
   an einer beweglichen Sinterstelle auftrifft,
- eine Einrichtung zum Erfassen der Temperatur des Pulvers
   in einer beweglichen Erfassungsfläche
   im Bereich der Sinterstelle,
- eine Einrichtung zur Regelung des Laserstrahls,
   die in Abhängigkeit von einem Signal der
   Einrichtung zum Erfassen der Temperatur des Pulvers
   die Leistung des Laserstrahls regelt,
sowie zusätzlich
- eine Einrichtung zur Kompensation (4)
   positionsabhängiger Fehler bei der Temperaturerfassung,
   die wenigstens eine der nachfolgenden Fehlerquellen in Abhängigkeit von der Position der Erfassungsfläche auf der Oberfläche des Pulvers berücksichtigt:
   - die geometrischen Veränderungen der beweglichen Erfassungsfläche, die in Abhängigkeit von der Position der Erfassungsfläche auf der Oberfläche des Pulverbettes auftreten,
   - die chromatischen Fehler, die hervorgerufen werden durch eine unterschiedlich starke Bündelwirkung des eingesetzten optischen Systems bei den unterschiedlichen Wellenlängen des Laserstrahls und der Wärmestrahlung,
   - die Justierfehler, die in der Praxis bei der koaxialen Einstellung beider Strahlen nahezu unvermeidlich auftreten.

Wesentlich für eine korrekte Temperaturerfassung ist ein gleichbleibendes FlächenVerhältnis zwischen dem Laserspot und der Erfassungsfläche der Wärmestrahlung.

Erfolgt die Fokussierung des Laserstrahls über eine einfache Linse oder ein Linsensystem, so ist dieses üblicherweise auf den Mittelpunkt des Baufeldes optimiert. Für die Außenbereiche des Baufeldes resultiert daraus eine Vergrößerung und eine Verzerrung des Laserspots und damit der Sinterstelle, da sich der Laserstrahl außerhalb seines Fokus aufweitet und außerdem mit einem Neigungswinkel zur Oberfläche des Baufeldes auftrifft. Für die Gewährleistung einer gleichbleibenden Sinterqualität über das gesamte Baufeld wird deshalb die Aufweitung des Laserstrahls und die daraus resultierende Veränderung der Geometrie des Laserspots und der Sinterstelle durch eine geeignete Optik, durch die der Fokus des Laserstrahls geregelt wird, kompensiert.

Eine ähnliche Positionsabhängigkeit tritt bei der Erfassung der von der beweglichen Erfassungsfläche emittierten IR-Strahlung auf, woraus - ohne deren Berücksichtigung - Fehler in der Temperaturerfassung resultieren.

Wenn der Laserstrahl und das Temperatursignal über das selbe optische System geführt werden, dann sollten die Geometrieänderungen von Sinterstelle und Erfassungsfläche nahezu gleich bleiben (, solange die relative Position beider Strahlen sich nicht verändert).

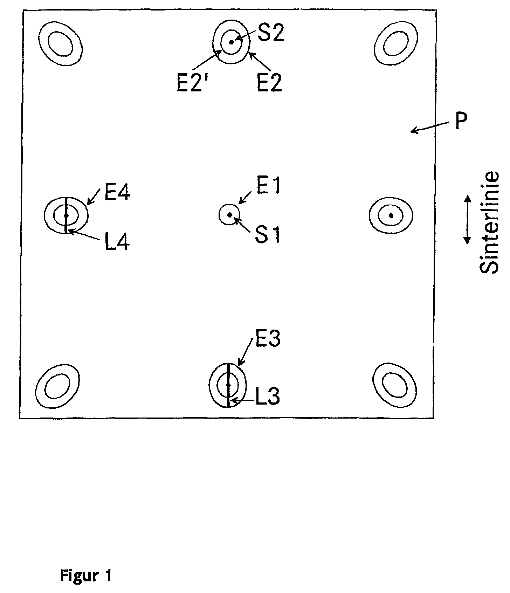

Die Positionsabhängigkeit der Geometrie der Erfassungsfläche kann man sich an dem nachfolgend beschriebenen und in der Figur 1 dargestellten Beispiel verdeutlichen:

Angenommen, in einer Ausgangsposition trifft der Laserstrahl an einer Sinterstelle S1 senkrecht auf die Oberfläche des Pulverbettes. Die Erfassungsfläche E1 wird ebenfalls aus einer senkrechten Perspektive erfaßt. Allerdings wird die von der Oberfläche des Pulverbettes emittierte Temperaturstrahlung, wie in der EP 0731743 B vorgeschlagen, zwar über dieselben Scannerspiegel wie der Laserstrahl geführt, dann aber aus der Laseroptik ausgekoppelt und über ein eigenes Linsensystem fokussiert. Das Linsensystem ist so gestaltet, daß es ein kreisförmiges Beobachtungsfenster bildet; demnach erscheint die Erfassungsfläche in dieser Ausgangsposition ebenfalls kreisförmig. Während des Sinterprozesses wird der Laserstrahl nun an eine Sinterstelle S2 geführt, dort trifft er mit einem bestimmten Neigungswinkel zur Oberfläche auf das Pulverbett auf. Das Beobachtungsfenster ist nun nach wie vor kreisförmig, durch die Neigung zur Oberfläche ergibt sich nun aber eine verzerrte Erfassungsfläche E2, die eine elliptische Form aufweist und durch die größere Entfernung der Oberfläche zum Fokussiersystem, das auf die Entfernung zur Baufeldmitte optimiert ist, ist E2 nun deutlich größer als E1.

Der Laserstrahl wird in Linien verfahren. Deshalb ist es ferner wesentlich, welche Ausrichtung diese Verfahrlinie zur Hauptachse der Ellipse der Erfassungsfläche hat. Der Anteil einer heißen Sinterlinie L an einer Erfassungsfläche E ist (bei gleicher Größe der Erfassungsfläche) maximal, wenn die Sinterlinie und die Hauptachse der Ellipse aufeinanderfallen (L3: E3), er ist minimal, wenn sie senkrecht aufeinander stehen (L4: E4). Auch wenn der Laser- und Wärmestrahl durch das gleiche Optiksystem geführt werden, ändert sich das Flächenverhältnis von Laserspot zu Temperaturerfassungsfläche und damit die erfaßte Temperatur: Wenn die Temperaturerfassungsfläche um einen Faktor zwischen 1 und 1,41 größer als der Laserspot ist, wird in der Position E4 höhere Temperatur angezeigt. Steigt dieser Faktor über 1,41, so wird in der Position E3 eine höhere Temperatur angezeigt. Nur wenn der Faktor zufällig genau 1,41 beträgt, bleibt die angezeigte Temperatur positionunabhängig. In zwei elliptischen Erfassungsflächen gleicher Größe (E3 und E4) können demnach bei gleicher Laserleistung trotzdem unterschiedliche Temperaturen erfaßt werden. Demnach ist in diesem Beispiel zwar die Positionsabhängigkeit der Form der Erfassungsfläche radialsymmetrisch, nicht aber die Temperaturerfassung, sondern diese ist sowohl inhomogen in Abhängigkeit vom Neigungswinkel des Laserstrahls als auch in Abhängigkeit von der Position der Erfassungsstelle auf dem Baufeld.

Eine weitere Fehlerquelle ist der chromatische Fehler. Typischerweise wird beim Lasersintern ein CO₂-Laser mit einer Wellenlänge von 10,6 µm eingesetzt. Die Wärmestrahlungen zur Temperaturerfassung weisen eine Wellenlänge von 1 bis 10 µm auf. Bei der Temperaturerfassung wird versucht, die Wellenlänge 10,6 µm durch einen geeigneten Filter zu entfernen, um Störungen durch den Laser auszuschließen. Die fokussierende Wirkung des Optiksystems ist in der Regel bei unterschiedlichen Wellenlängen nicht gleich. Wenn die Temperaturerfassungsfläche von der Baufeldmitte zu Rand hin bewegt wird, steigt der Neigungswinkel und damit die Differenz der Defokussierungen beider Strahlen. Das Flächenverhältnis von Laserspot zu Temperaturerfassungsfläche ändert sich somit ebenfalls postionsabhängig.

Bevor man die Temperatur messen kann, muß man dafür sorgen, daß der Laser- und Temperaturstrahl koaxial eingestellt werden. In der Praxis wird auch nach einer sorgfältigen Justierung immer ein Restfehler existieren. Dieser Fehler wird bei einem größeren Neigungswinkel verstärkert. Dadurch entsteht ein weiterer positionsabhängiger Meßfehler der Temperatur.

Eine Einrichtung zur Kompensation positionsabhängiger Fehler bei der Temperaturerfassung, also wenigstens einer der Fehlerquellen a) Geometrie der Erfassungsfläche (Form, Größe und Ausrichtung der Hauptachse der Erfassungsfläche), b) chromatische Fehler, c) Justierfehler ermöglicht die Bestimmung wesentlich realistischerer Temperaturwerte aus den gemessenen Temperaturwerten als eine Temperaturbestimmung nach dem Stand der Technik gemäß der EP 0731743 B1 - also ohne eine derartige Berücksichtigung. Die gemeinsame Realisierung in einer einzelnen Vorrichtung ist aus konstruktiven und ökonomischen Gründen besonders vorteilhaft und liefert überraschend gute Ergebnisse bei der Temperaturerfassung. Dies ermöglicht eine wesentlich verbesserte Kontrolle der Laserleistung, woraus wiederum eine wesentlich verbesserte Bauteilqualität resultiert.

In einer vorteilhaften Ausführungsform der erfindungsgemäßen Vorrichtung weist die Einrichtung zur Berücksichtigung der Geometrie der beweglichen Erfassungsfläche eine Einrichtung zur Aufnahme einer Tabelle auf, wobei in der Tabelle abgelegt sind: Korrekturfaktoren bezüglich wenigstens einer der Fehlerquellen Geometrie der beweglichen Erfassungsfläche, chromatische Fehler, Justierfehler in Abhängigkeit von der Position der Erfassungsfläche auf der Oberfläche des Pulvers.

Mittels einer solchen Einrichtung zur Aufnahme einer Tabelle oder direkt mit einer solchen Tabelle kann für jede Position der Erfassungsfläche auf der Oberfläche des Pulvers deren sämtliche Korrekturfaktoren bestimmt werden durch einfache Interpolation zwischen naheliegenden Positionen, zu denen die Korrekturfaktoren in der Tabelle abgelegt sind. Eine nachfolgende Berücksichtigung der positionsabhängigen Fehler wird so wesentlich erleichtert. Einzelne Werte dieser Tabelle können leicht experimentell ermittelt werden. Dies ist insbesondere bei komplizierteren Optiken von Vorteil, da hier eine Berechnung der Geometrieparameter der Erfassungsfläche aufwendig wäre.

In einer weiteren vorteilhaften Ausführungsform der erfindungsgemäßen Vorrichtung weist die Einrichtung zur Kompensation eine Einrichtung auf zur Gewährleistung, daß die Größe der beweglichen Erfassungsfläche im wesentlichen konstant gehalten wird, unabhängig von der Position der Erfassungsfläche auf der Oberfläche des Pulvers.

Hierdurch wird - aufgrund der Berücksichtigung und Kompensation der Positionsabhängigkeit der Größe der Erfassungsfläche - eine Fehlbestimmung der Temperatur bereits im Ansatz minimiert.

In speziellen Ausgestaltungen dieser vorteilhaften Ausführungsform der erfindungsgemäßen Vorrichtung ist die Einrichtung zur Gewährleistung realisiert als Einrichtung zur dynamischen Nachfokussierung der beweglichen Erfassungsfläche oder als F-Theta-Optik. Die erstgenannte Einrichtung kompensiert die Bildfeldkrümmung durch positionsabhängiges Verfahren einer Konkav-Linse. Die letztgenannte Einrichtung kompensiert die Bildfeldkrümmung durch eine Kombination aus Konkav- und Konvex-Linsen.

In einer weiteren vorteilhaften Ausführungsform der erfindungsgemäßen Vorrichtung ist die Einrichtung zum Erfassen der Temperatur des Pulvers derart gestaltet, daß sie eine Temperatur erfaßt, welche über die Erfassungsfläche gemittelt ist. Für die meisten Anwendungsfälle ist ein gemittelter Temperaturwert ein ausreichendes Maß für die Regelung der Laserleistung.

In einer weiteren vorteilhaften Ausführungsform der erfindungsgemäßen Vorrichtung ist die Einrichtung zum Erfassen der Temperatur des Pulvers ein Pyrometer. Ein Pyrometer ist eine vergleichsweise einfache, robuste und leicht zu handhabende Einrichtung zum Erfassen der Temperatur.

Die Aufgabe wird bezüglich des zu schaffenden Verfahrens zum Sintern eines Pulvers mit einem Laserstrahl erfindungsgemäß dadurch gelöst, daß es folgende Schritte umfaßt
- Lenken des Laserstrahls,
   auf eine bewegliche Sinterstelle,
   auf einer Oberfläche des Pulvers,
- Erfassen der Temperatur des Pulvers
   in einer beweglichen Erfassungsfläche
   im Bereich der Sinterstelle,
- Regeln der Leistung des Laserstrahls
   in Abhängigkeit von der erfaßten Temperatur des Pulvers,
sowie
- Kompensation der bereits bzgl. der Vorrichtung genannten positionsabhängigen Fehler bei der Temperaturerfassung.

Das Grundprinzip des erfindungsgemäßen Verfahrens besteht darin, daß die positionsabhängigen Fehler bei der Temperaturerfassung kompensiert werden. Diese sind: die geometrischen Veränderungen der beweglichen Erfassungsfläche sowie die chromatischen und Justierfehler, die in Abhängigkeit von der Position der Erfassungsfläche auf der Oberfläche des Pulverbettes auftreten. Dadurch wird die Bestimmung wesentlich realistischerer Temperaturwerte aus den gemessenen Temperaturwerten ermöglicht.

In einer vorteilhaften Ausführungsform des erfindungsgemäßen Verfahrens werden aus einer Tabelle Korrekturfaktoren bezüglich wenigstens einer der Fehlerquellen Geometrie der beweglichen Erfassungsfläche, chromatische Fehler, Justierfehler in Abhängigkeit von der Position der Erfassungsfläche auf der Oberfläche des Pulvers, ausgelesen. Die hieraus resultierenden Vorteile wurden bereits bei der korrespondierenden Vorrichtung genannt.

In einer weiteren vorteilhaften Ausführungsform des erfindungsgemäßen Verfahrens wird die Größe der beweglichen Erfassungsfläche im wesentlichen konstant gehalten unabhängig von der Position der Erfassungsstelle auf der Oberfläche des Pulvers. Hierdurch wird - aufgrund der Berücksichtigung und Kompensation der Positionsabhängigkeit der Größe der Erfassungsfläche - eine Fehlbestimmung der Temperatur bereits im Ansatz minimiert. Die weiteren Einflußparameter (Form und Ausrichtung der beweglichen Erfassungsfläche, chromatische Abration sowie Justierfehler) werden beispielsweise aus der Tabelle ausgelesen, berücksichtigt und ebenfalls kompensiert, woraus eine optimale Temperaturbestimmung resultiert.

In speziellen Ausgestaltungen dieser vorteilhaften Ausführungsform des erfindungsgemäßen Verfahrens wird die Größe der beweglichen Erfassungsfläche mittels einer dynamischen Nachfokussierung der beweglichen Erfassungsfläche oder mittels einer F-Theta-Optik im wesentlichen konstant gehalten.

In einer weiteren vorteilhaften Ausführungsform des erfindungsgemäßen Verfahrens wird eine über die Erfassungsfläche gemittelte Temperatur erfaßt. Hierdurch erfolgt die Regelung der Laserleistung ausreichend genau aber vergleichsweise einfach.

Nachfolgend werden anhand eines Ausführungsbeispiels und der Figur 1 die erfindungsgemäße Vorrichtung und das erfindungsgemäße Verfahren näher erläutert. Dabei zeigt:
- Figur 1: Die Änderung der Geometrie der Erfassungsfläche E in Abhängigkeit von der Position auf der Pulveroberfläche

Bei der SLS mittels einer Vorrichtung und einem Verfahren nach dem Stand der Technik ändert sich die Geometrie der Erfassungsfläche E wie in Figur 1 dargestellt:

In einer Ausgangsposition trifft der Laserstrahl an einer Sinterstelle S1 senkrecht auf die Oberfläche des Pulverbettes. Die Erfassungsfläche E1 wird mittels der selben Optik und damit ebenfalls aus einer senkrechten Perspektive erfaßt.

Die vorstehend beschriebene Postionsabhängigkeit der Größe der Sinterstelle und der Größe der Erfassungsstelle wird mittels einer F-Theta-Optik kompensiert, welche die Bildfeldkrümmung ausgleicht und so eine Erfassungsfläche E mit im wesentlichen konstanter Größe gewährleistet - unabhängig von ihrer Position auf der Oberfläche des Pulverbettes. Die weiteren Einflußparameter (Form und Ausrichtung der beweglichen Erfassungsfläche, chromatische Abration sowie Justierfehler) werden aus einer Tabelle ausgelesen und berücksichtigt, indem sie rechnerisch kompensiert werden, woraus eine optimale Temperaturbestimmung resultiert. Die Einflußparameter und deren Korrekturfaktoren wurden vorher empirisch und/oder theoretisch bestimmt.

Während des Sinterprozesses wird der Laserstrahl nun an eine Sinterstelle S2 geführt, dort trifft er mit einem bestimmten Neigungswinkel zur Oberfläche auf das Pulverbett auf. Das Beobachtungsfenster zur Erfassung der Temperatur ist nach wie vor kreisförmig und durch die Neigung zur Oberfläche ergibt sich eine verzerrte Erfassungsfläche E2', die eine elliptische Form aufweist. Die Vergrößerung der Erfassungsfläche E2' wird jedoch durch die F-Theta-Optik kompensiert und dadurch werden Fehler in der Temperaturbestimmung der für die Sinterung relevanten Bereiche der jeweiligen Oberfläche minimiert. In der Figur 1 sind jeweils die unkorrigierte Erfassungsfläche E (äußere Ellipse) und die korrigierte Erfassungsfläche E' (innere Ellipse) dargestellt.

Durch die im wesentlichen konstante Größe der Erfassungsfläche E ist die Erfassung eines über die Erfassungsfläche E gemittelten Temperaturwertes völlig ausreichend, um eine qualitativ hochwertige und effektive Regelung der Laserleistung zu gewährleisten.

Die Erfassung der Temperatur erfolgt deshalb mittels eines Pyrometers. Abhängig von der erfaßten Temperatur wird die Laserleistung durch Modulation der Laserpulsweite geregelt. Die Fokussierung von Laserstrahl und Erfassungsfläche erfolgt in diesem Beispiel über dieselbe Optik.

Die erfindungsgemäße Vorrichtung und das erfindungsgemäße Verfahren erweisen sich in den Ausführungsformen des vorstehend beschriebenen Beispiels als besonders geeignet für die Optimierung der Laserleistungsregelung bei der üblichen SLS wie sie beispielsweise in der EP 0731743 B1 beschrieben wird.

Die Erfindung ist nicht nur auf das zuvor geschilderte Ausführungsbeispiel beschränkt, sondern vielmehr auf weitere übertragbar.

So ist es zum Beispiel denkbar, wie in der EP 0731743 B1 vorgeschlagen, die Temperaturerfassung aus dem optischen System des Lasers teilweise oder komplett auszukoppeln und über ein separates optisches System zu führen. Dies ist vorteilhaft, wenn die üblicherweise verwendeten Antireflex-Beschichtungen der Laseroptik eine zu starke Dämpfung des Temperatursignals bewirken würden. Außerdem können so beide optischen Systeme unabhängig voneinander und damit effektiver auf die jeweiligen Anforderungen optimiert werden. Wesentlich bei dieser Ausgestaltungsform ist jedoch, daß - im Gegensatz zu der EP 0731743 B1 - eine Berücksichtigung der Positionsabhängigkeit der Erfassungsfläche E erfolgt, beispielsweise in Kombination mit einer eigenen F-Theta-Optik oder einer eigenen dynamischen Nachfokussierung.

Außerdem kann ein spezielles Pyrometer - ein sogenanntes Quotientenpyrometer vorteilhaft sein. Ein Quotientenpyrometer mißt zwei Wellenlängen und kann deshalb - bei geeigneter Wahl der beiden Wellenlängen - die heiße Sinterlinie vom Rest der Erfassungsfläche unterscheiden. Hiermit ist eine weitere Berücksichtigung von Geometrieparametern und damit eine weitere Minimierung von Fehlerquellen der Temperaturerfassung möglich.

## Patentansprüche

1. Vorrichtung zum Sintern eines Pulvers (P) mit einem Laserstrahl (L) enthaltend
- eine Einrichtung zur Erzeugung des Laserstrahls (L),
der auf eine Oberfläche des Pulvers (P)
an einer beweglichen Sinterstelle (S) auftrifft,
- eine Einrichtung zum Erfassen der Temperatur des Pulvers (P)
in einer beweglichen Erfassungsfläche (E)
im Bereich der Sinterstelle (S),
- eine Einrichtung zur Regelung des Laserstrahls (L),
die in Abhängigkeit von einem Signal der
Einrichtung zum Erfassen der Temperatur des Pulvers (P)
die Leistung des Laserstrahls (L) regelt,
**dadurch gekennzeichnet,**
**daß** die Vorrichtung zusätzlich aufweist,
- eine Einrichtung zur Kompensation
positionsabhängiger Fehler bei der Temperaturerfassung,
die wenigstens eine der Fehlerquellen
- Veränderung der Geometrie der beweglichen Erfassungsfläche (E),
- chromatische Fehler bei der unterschiedlichen Bündelung von Laser- und Wärmestrahlung,
- Justierfehler bei der koaxialen Einstellung der Laser- und Wärmestrahlung
in Abhängigkeit von der Position der Erfassungsfläche (E)
auf der Oberfläche des Pulvers (P) berücksichtigt.

2. Vorrichtung nach Anspruch 1,
**dadurch gekennzeichnet,**
**daß** die Einrichtung zur Kompensation aufweist
- eine Einrichtung zur Aufnahme einer Tabelle,
wobei in der Tabelle Korrekturfaktoren abgelegt sind
bezüglich wenigstens einer der Fehlerquellen
- Geometrie der beweglichen Erfassungsfläche (E),
- chromatische Fehler,
- Justierfehler
in Abhängigkeit von der Position der Erfassungsfläche (E) auf der Oberfläche des Pulvers (P).

3. Vorrichtung nach einem der vorhergehenden Ansprüche,
**dadurch gekennzeichnet,**
**daß** die Einrichtung zur Kompensation aufweist
- eine Einrichtung zur Gewährleistung,
**daß** die Größe der beweglichen Erfassungsfläche (E)
im wesentlichen konstant gehalten wird,
unabhängig von der Position der Erfassungsfläche (E) auf der Oberfläche des Pulvers (P).

4. Vorrichtung nach Anspruch 3,
**dadurch gekennzeichnet,**
**daß** die Einrichtung zur Gewährleistung ausgebildet ist als Einrichtung zur dynamischen Nachfokussierung der beweglichen Erfassungsfläche (E).

5. Vorrichtung nach Anspruch 3,
**dadurch gekennzeichnet,**
**daß** die Einrichtung zur Gewährleistung ausgebildet ist als F-Theta-Optik.

6. Vorrichtung nach einem der vorhergehenden Ansprüche,
**dadurch gekennzeichnet,**
**daß** die Einrichtung zum Erfassen der Temperatur des Pulvers (P) derart gestaltet ist, daß sie eine Temperatur erfaßt, welche über die Erfassungsfläche (E) gemittelt ist.

7. Vorrichtung nach einem der vorhergehenden Ansprüche,
**dadurch gekennzeichnet,**
**daß** die Einrichtung zum Erfassen der Temperatur des Pulvers (P) ein Pyrometer ist.

8. Verfahren zum Sintern eines Pulvers (P) mit einem Laserstrahl (L)
umfassend die Schritte
- Lenken des Laserstrahls (L),
auf eine bewegliche Sinterstelle (S),
auf einer Oberfläche des Pulvers (P),
- Erfassen der Temperatur des Pulvers (P)
in einer beweglichen Erfassungsfläche (E)
im Bereich der Sinterstelle (S),
- Regeln der Leistung des Laserstrahls (L)
in Abhängigkeit von der erfaßten Temperatur des Pulvers (P),
**dadurch gekennzeichnet,**
**daß** positionsabhängige Fehler bei der Temperaturerfassung derart kompensiert werden, daß wenigstens eine der positionsabhängigen Fehlerquellen
- Veränderung der Geometrie der beweglichen Erfassungsfläche (E),
- chromatische Fehler bei der unterschiedlichen Bündelung von Laser- und Wärmestrahlung,
- Justierfehler bei der koaxialen Einstellung der Laser- und Wärmestrahlung
in Abhängigkeit von der Position der Erfassungsfläche (E)
auf der Oberfläche des Pulvers (P) berücksichtigt wird.

9. Verfahren nach Anspruch 8,
**dadurch gekennzeichnet,**
**daß** Korrekturfaktoren für wenigstens eine der positionsabhängigen Fehlerquellen in Abhängigkeit von der Position der Erfassungsfläche (E) auf der Oberfläche des Pulvers (P) aus einer Tabelle ausgelesen und berücksichtigt werden.

10. Verfahren nach einem der vorhergehenden Ansprüche 8 bis 9,
**dadurch gekennzeichnet,**
**daß** die Größe der beweglichen Erfassungsfläche (E) im wesentlichen konstant gehalten wird
unabhängig von der Position der Erfassungsstelle (E) auf der Oberfläche des Pulvers (P).

11. Verfahren nach Anspruch 10,
**dadurch gekennzeichnet,**
**daß** die Größe der beweglichen Erfassungsfläche (E) mittels einer dynamischen Nachfokussierung im wesentlichen konstant gehalten wird.

12. Verfahren nach Anspruch 10,
**dadurch gekennzeichnet,**
**daß** die Größe der beweglichen Erfassungsfläche (E) mittels einer F-Theta-Optik im wesentlichen konstant gehalten wird.

13. Verfahren nach einem der vorhergehenden Ansprüche 8 bis 12,
**dadurch gekennzeichnet,**
**daß** eine über die Erfassungsfläche (E) gemittelte Temperatur erfaßt wird.

## Claims

1. Apparatus for sintering a powder (P) with a laser beam (L), comprising
- a device for generating the laser beam (L), which impinges on a surface of the powder (P) at a movable sintering point (S),
- a device for detecting the temperature of the powder (P) in a movable detection area (E) in the region of the sintering point (S),
- a device for controlling the laser beam (L), which controls the power of the laser beam (L) in dependence on a signal of the device for detecting the temperature of the powder (P),
**characterized in that** the apparatus additionally has
- a device for compensating for position-dependent errors in the temperature detection, which takes into account at least one of the error sources
- changing of the geometry of the movable detection area (E),
- chromatic errors in the different concentration of the laser radiation and heat radiation,
- adjustment errors in the coaxial setting of the laser radiation and heat radiation
in dependence on the position of the detection area (E) on the surface of the powder (P).

2. Apparatus according to Claim 1, **characterized in that** the compensating device has
- a device for receiving a table, the table containing stored correction factors with respects to at least one of the error sources
- geometry of the movable detection area (E),
- chromatic errors
- adjustment errors
in dependence on the position of the detection area (E) on the surface of the powder (P).

3. Apparatus according to one of the preceding claims, **characterized in that** the compensating device has
- a device for ensuring that the size of the movable detection area (E) is kept substantially constant, irrespective of the position of the detection area (E) on the surface of the powder (P).

4. Apparatus according to Claim 3, **characterized in that** the ensuring device is formed as a device for the dynamic re-focusing of the movable detection area (E).

5. Apparatus according to Claim 3, **characterized in that** the ensuring device is formed as an F-theta lens.

6. Apparatus according to one of the preceding claims, **characterized in that** the device for detecting the temperature of the powder (P) is designed in such a way that it detects a temperature which is averaged. over the detection area (E).

7. Apparatus according to one of the preceding claims, **characterized in that** the device for detecting the temperature of the powder (P) is a pyrometer.

8. Method for sintering a powder (P) with a laser beam (L) comprising the steps of
- directing the laser beam (L)
onto a movable sintering point (S),
on a surface of the powder (P),
- detecting the temperature of the powder (P)
in a movable detection area (E)
in the region of the sintering point (S),
- controlling the power of the laser beam (L)
in dependence on the detected temperature of the powder (P),
**characterized in that** position-dependent errors in the temperature detection are compensated by account being taken of at least one of the position-dependent error sources
- changing of the geometry of the movable detection area (E),
- chromatic errors in the different concentration of the laser radiation and heat radiation,
- adjustment errors in the coaxial setting of the laser radiation and heat radiation
in dependence on the position of the detection area (E) on the surface of the powder (P).

9. Method according to Claim 8, **characterized in that** correction factors for at least one of the position-dependent error sources are read out from a table and taken into account in dependence on the position of the detection area (E) on the surface of the powder (P).

10. Method according to one of the preceding claims 8 or 9, **characterized in that** the size of the movable detection area (E) is kept substantially constant irrespective of the position of the detection point (E) on the surface of the powder (P).

11. Method according to Claim 10, **characterized in that** the size of the movable detection area (E) is kept substantially constant by means of a dynamic re-focusing.

12. Method according to Claim 10, **characterized in that** the size of the movable detection area (E) is kept substantially constant by means of an F-theta lens.

13. Method according to one of the preceding claims 8 to 12, **characterized in that** a temperature averaged over the detection area (E) is detected.

## Revendications

1. Dispositif pour le frittage d'une poudre (P) avec un faisceau laser (L) contenant
- un appareil pour la production du faisceau laser (L), qui arrive sur une surface de la poudre (P) en un emplacement de frittage (S) mobile,
- un appareil pour l'enregistrement de la température de la poudre (P) dans une surface d'enregistrement (E) mobile dans la zone de l'emplacement de frittage (S),
- un appareil pour le réglage du faisceau laser (L), qui régule la puissance du faisceau laser (L) en fonction d'un signal de l'appareil pour l'enregistrement de la température de la poudre (P),
**caractérisé en ce que**
le dispositif présente en supplément
- un appareil pour la compensation d'erreurs dépendantes de la position lors de l'enregistrement de la température, qui tient compte au moins de l'une des sources d'erreur suivantes
- variation de la géométrie de la surface d'enregistrement (E) mobile,
- erreurs chromatiques lors de la focalisation différente du rayonnement laser et du rayonnement de chaleur,
- erreurs d'ajustage lors du réglage coaxial du rayonnement laser et du rayonnement de chaleur,
en fonction de la position de la surface d'enregistrement (E) sur la surface de la poudre (P).

2. Dispositif selon la revendication 1,
**caractérisé en ce que**
l'appareil pour la compensation présente
- un appareil pour l'enregistrement d'un tableau, moyennant quoi on consigne dans le tableau des facteurs de correction concernant au moins l'une des sources d'erreur suivantes
- géométrie de la surface d'enregistrement (E) mobile,
- erreurs chromatiques,
- erreurs d'ajustage
- en fonction de la position de la surface d'enregistrement (E) sur la surface de la poudre (P).

3. Dispositif selon l'une quelconque des revendications précédentes,
**caractérisé en ce que**
l'appareil pour la compensation présente
- un appareil pour garantir que la grandeur de la surface d'enregistrement (E) mobile est maintenue sensiblement constante,
indépendamment de la position de la surface d'enregistrement (E) à la surface de la poudre (P) .

4. Dispositif selon la revendication 3,
**caractérisé en ce que**
l'appareil de garantie est conçu comme un appareil pour la focalisation ultérieure dynamique de la surface d'enregistrement (E) mobile.

5. Dispositif selon la revendication 3,
**caractérisé en ce que**
l'appareil de garantie est conçu comme une optique F-thêta.

6. Dispositif selon l'une quelconque des revendications précédentes,
**caractérisé en ce que**
l'appareil pour l'enregistrement de la température de la poudre (P) est conçu de telle sorte qu'il enregistre une température dont on calcule la moyenne par rapport à la surface d'enregistrement (E) .

7. Dispositif selon l'une quelconque des revendications précédentes,
**caractérisé en ce que**
l'appareil pour l'enregistrement de la température de la poudre (P) est un pyromètre.

8. Procédé pour le frittage d'une poudre (4) avec un faisceau laser (L) comprenant les étapes suivantes :
- guidage du faisceau laser (L), sur un emplacement de frittage (S) mobile, sur une surface de la poudre (P),
- enregistrement de la température de la poudre (P) dans une surface d'enregistrement (E) mobile dans la zone de l'emplacement de frittage (S),
- réglage de la puissance du faisceau laser (L) en fonction de la température enregistrée de la poudre (P),
**caractérisé en ce que**
des erreurs dépendantes de la position sont compensées lors de l'enregistrement de la température de telle sorte qu'au moins l'une des sources d'erreurs dépendantes de la position
- variation de la géométrie de la surface d'enregistrement (E) mobile,
- erreurs chromatiques lors de la focalisation différente du rayonnement laser et du rayonnement de chaleur,
- erreurs d'ajustage lors du réglage coaxial du rayonnement laser et du rayonnement de chaleur
- est prise en compte en fonction de la position de la surface d'enregistrement (E) sur la surface de la poudre (P).

9. Procédé selon la revendication 8,
**caractérisé en ce que**
des facteurs de correction pour au moins une des sources d'erreur dépendantes de la position sont lus dans un tableau et pris en compte en fonction de la position de la surface d'enregistrement (E) sur la surface de la poudre (P).

10. Procédé selon l'une quelconque des revendications précédentes 8 à 9,
**caractérisé en ce que**
la grandeur de la surface d'enregistrement (E) mobile est maintenue sensiblement constante indépendamment de la position de l'emplacement d'enregistrement (E) sur la surface de la poudre (P) .

11. Procédé selon la revendication 10,
**caractérisé en ce que**
la grandeur de la surface d'enregistrement (E) mobile est maintenue sensiblement constante au moyen d'une focalisation ultérieure dynamique.

12. Procédé selon la revendication 10,
**caractérisé en ce que**
la grandeur de la surface d'enregistrement (E) mobile est maintenue sensiblement constante au moyen d'une optique F-thêta.

13. Procédé selon l'une quelconque des revendications précédentes 8 à 12,
**caractérisé en ce que**
une température, dont la moyenne est calculée par rapport à la surface d'enregistrement (E), est enregistrée.
